# EUROPÄISCHE PATENTSCHRIFT

(11) **EP 0 963 474 B1**
(45) Veröffentlichungstag und Bekanntmachung des Hinweises auf die Patenterteilung: **17.04.2002**
(21) Anmeldenummer: 98901346.1
(22) Anmeldetag: 08.01.1998
(51) Int. Cl.: D04H 13/00, D04H 1/46, B32B 5/06

(54) **FLÄCHIGES GEBILDE, INSBESONDERE EIN VLIESSTOFF**
FLAT STRUCTURE, IN PARTICULAR A NON-WOVEN FABRIC
PRODUIT PLAT, NOTAMMENT NON-TISSE

(30) Priorität: 10.01.1997 DE 19700660
(43) Veröffentlichungstag der Anmeldung: 15.12.1999
(73) Patentinhaber: FALKE GARNE Zweigniederlassung der FALKE KG, 57392 Schmallenberg (DE)
(72) Erfinder: GROBBEL, Michael, D-57392 Schmallenberg (DE); SCHAUERTE, Hubert, D-57392 Schmallenberg (DE)
(74) Vertreter: Hoeger, Stellrecht & Partner
(86) Internationale Anmeldenummer: EP9800082
(87) Internationale Veröffentlichungsnummer: WO9830745

(56) Entgegenhaltungen:
- EP-A- 0 013 428
- EP-A- 0 285 338
- DE-A- 3 904 526
- FR-A- 2 445 866
- US-A- 5 272 000
- US-A- 5 476 711

## Beschreibung

Die Erfindung betrifft ein Verfahren zum Herstellen eines flächigen Gebildes, ein flächiges Gebilde sowie eine Anlage zum Herstellen eines flächigen Gebildes.

Flächige Gebilde, insbesondere Vliesstoffe aus Stapelfasern werden nach mechanischen oder aerodynamischen Verfahren hergestellt.

Beim mechanischen Kardierverfahren werden die Faserflore bzw. Ausgangsvliese auf Krempeln gebildet. Die so hergestellten Faservliese werden dann mittels eines Kreuzlegers auf ein quer zur Arbeitsrichtung der Krempel laufendes Transportband zick-zack-artig in mehreren Florlagen zu Kreuzlagenvliesen abgetafelt und anschließend vernadelt. Durch dieses Verfahren werden flächige Gebilde hergestellt, die als Wand- und/oder Bodenbeläge verwendbar sind. Um den Vliesen eine höhere Festigkeit und damit eine größere Abnutzungsfestigkeit zu verleihen, ist bekannt, den in einen ersten Arbeitsgang erhaltenen Vliesstoff in einem zweiten Arbeitsgang durch Nadeln mechanisch zu verfestigen.

Das aerodynamische Verfahren zum Herstellen von Vliesen ermöglicht die Herstellung von grobvernadelten Vliesen. Bei diesem Verfahren werden die einem Einspeiseaggregat gleichmäßig zugeführten, mechanisch voraufgelösten Fasern von einem kräftigen Luftstrom erfaßt und beispielsweise gegen eine perforierte rotierende Trommel oder ein Siebband geblasen. Die Luft wird durch das Trommelinnere abgesaugt. Die Fasern bilden auf der Trommel ein wirr gelegtes Vlies, das von einem Transporteur weitertransportiert wird. Dieses Vlies wird nicht wie beim mechanischen Verfahren in mehreren Lagen aufgetafelt. Der so hergestellte Vliesstoff weist auch keine hohe Festigkeit auf und wird gewöhnlicherweise nur zu Zwecken verwendet, bei denen es nicht auf eine hohe Abnutzungsfestigkeit ankommt, wie z.B. in Polsterungen usw..

Durch die DE 39 04 526 A1 ist ein Vliesstoff und ein Verfahren zur Herstellung eines Vliesstoffes bekannt, der einen geschichteten Aufbau aufweist. Der Vliesstoff weist eine Oberschicht, aus an der Oberseite strukturiertem Nadelvlies, sowie eine Unterschicht aus Nadelvlies auf. Die Unterschicht wird gegen die Oberschicht vernadelt. Durch die Vernadelung der Unterschicht mit der Oberschicht wird die Reliefstruktur der Oberschicht nicht zerstört. Voraussetzung für die Herstellung eines solchen Vliesstoffes ist, daß die Oberschicht und die Unterschicht als Nadelvlies vorliegen.

Durch die EP 0 013 428 B1 ist ein flächiges Gebilde, welches eine Nutzschicht und eine Trägerschicht aus einem Vliesstoff aufweist, bekannt. Die Nutzschicht enthält Fasergebilde aus sphärisch verwickelten Fasern, die mittels Vernadelungsfasern mit der Trägerschicht verbunden sind. Diese Fasergebilde werden in der EP 0 013 428 B 1 als Kugelgarne bezeichnet. Aufgrund der Riesel- und Rollfähigkeit der Kugelgarne können die Kugelgarne auf der Nutzschicht verteilt werden. Durch entsprechend dosierte Ablage einer Vielzahl von Kugelgarnen in einer gewünschten vorgegebenen Anordnung der Kugelgarne, können auch Muster auf der Nutzschicht gelegt werden.

Desweiteren ist durch die EP 0 053 700 A1 ein flächiges Gebilde bekannt, welches eine Nutzschicht und eine Trägerschicht aus einem Vliesstoff aufweist. Die Nutzschicht ist durch relativ dicke Stränge gebildet, wobei die Stränge im wesentlichen parallel zueinander verlaufen, so daß das flächige Gebilde den Eindruck eines handgewebten Bodenbelags erreicht.

Die EP 0 013 428 B1 und die EP 0 053 700 A1 offenbaren ein flächiges Gebilde, bei dem die Nutzschicht aus geometrischen Elementen mit einer einheitlichen Gestalt gebildet ist. Diese geometrisch einheitlichen Elemente können zwar unterschiedlicher Farbgebung sein, jedoch wird hierdurch die einheitliche Oberflächenstruktur lediglich farblich verändert.

Hiervon ausgehend liegt der vorliegenden Erfindung die Aufgabe zugrunde, ein Verfahren zum Herstellen eines flächigen Gebildes anzugeben, durch welches ein flächiges Gebilde herstellbar ist, welches eine optisch uneinheitliche Oberfläche aufweist, wobei die Nutzschicht rapportfrei ist. Ein weiteres Ziel ist, ein Flächengebilde anzugeben, das eine optisch uneinheitliche Oberfläche einer Nutzschicht aufweist, wobei die Nutzschicht rapportfrei ist. Ein weiteres Ziel der Erfindung ist, eine Anlage zum Herstellen eines flächigen Gebildes anzugeben, durch die ein flächiges Gebilde, insbesondere ein Vliesstoff, mit einer rapportfreien, optisch uneinheitlichen Nutzschicht einfach und kostengünstig herstellbar ist.

Diese Aufgabe wird erfindungsgemäß durch ein Verfahren mit den Merkmalen des Anspruchs 1, ein flächiges Gebilde mit den Merkmalen des Anspruchs 32 sowie eine Anlage zum Herstellen eines flächigen Gebildes mit den Merkmalen des Anspruchs 41 gelöst.

Bevorzugte Ausgestaltungen des Verfahrens, des flächigen Gebildes und der Anlage sind Gegenstand der jeweiligen Unteransprüche.

Das erfindungsgemäße Verfahren zum Herstellen eines flächigen Gebildes, insbesondere eines Vliesstoffes, das durch eine Nutzschicht und eine Trägerschicht aus einem Vliesstoff gebildet ist, zeichnet sich dadurch aus, daß wenigstens ein Teil der Elemente sich hinsichtlich ihrer Gestalt geometrisch unterscheidenden, die wenigstens teilweise die Nutzschicht bilden, in eine Aufbringvorrichtung eingebracht werden. Unter Elementen mit sich geometrisch unterscheidender Gestalt werden Elemente verstanden, die unterschiedliche Raumform aufweisen. Hierbei kann es sich um zylinderförmige, quaderförmige oder anders geartete Elemente handeln. Die sich geometrisch unterscheidenden Elemente werden in der Aufbringeinrichtung egalisiert, so daß eine im wesentlichen einheitliche Verteilung der Elemente vorliegt. Die Elemente werden in einem egalisierten Aufbringstrom auf die Trägerschicht aufgebracht. In einem weiteren Schritt werden die auf der Trägerschicht aufgebrachten Elemente wenigstens mit einer Trägerschicht vereinigt.

Das erfindungsgemäße Verfahren eröffnet die Möglichkeit, ein flächiges Gebilde herzustellen, welches eine optisch uneinheitliche Oberfläche der Nutzschicht aufweist, wobei die Nutzschicht rapportfrei ist. Die optisch uneinheitliche Oberfläche wird durch die sich geometrisch unterscheidenden Elemente erreicht, wobei die Elemente zusätzlich unterschiedlicher Färbung sein können. Die Rapportfreiheit der Nutzschicht ist im Hinblick auf eine Massenfertigung eines flächigen Gebildes vorteilhaft, da nach dem erfindungsgemäßen Verfahren eine reproduzierbare Herstellbarkeit eines flächigen Gebildes ermöglicht wird.

Die geometrisch unterschiedliche Gestalt aufweisenden Elemente werden vorzugsweise entsprechend wenigstens einem vorgegebenen Mengenverhältnis in die Aufbringvorrichtung eingebracht. Diese Elemente werden hinsichtlich ihrer Verteilung in der Aufbringvorrichtung so egalisiert, daß eine im wesentlichen rapportfreie Nutzschicht hergestellt werden kann.

Zur Einstellung des Flächengewichtes der Nutzschicht bzw. der Elemente, die die Nutzschicht bilden, wird vorgeschlagen, daß die Elemente in wenigstens einem Abschnitt eines Austritts der Aufbringvorrichtung zu dem Aufbringstrom verdichtet werden. Vorzugsweise werden die Elemente in einem trichterförmigen Abschnitt des Austrittskanals verdichtet.

Gemäß einer weiteren vorteilhaften Ausgestaltung des Verfahrens wird vorgeschlagen, daß die egalisierten Elemente dosiert in den verdichtenden Abschnitt des Austrittskanals eingebracht werden.

Die Elemente, die die Nutzschicht bilden, werden bevorzugt auf die Trägerschicht gelegt, gestreut und/oder geblasen. Der Aufbringvorgang der Elemente auf der Trägerschicht kann auch Kombinationen der einzelnen Aufbringarten beinhalten. Das Aufbringen der Elemente kann auch nacheinander erfolgen, wobei beispielsweise zunächst ein Teil der Elemente auf die Trägerschicht gelegt und danach weitere Elemente auf die Trägerschicht mit den gelegten Elementen gestreut werden.

Nach einer weiteren vorteilhaften Ausgestaltung des Verfahrens wird vorgeschlagen, daß die sich hinsichtlich der geometrischen Gestalt unterscheidenden Elemente wenigstens zwei sich unterscheidende Gruppen bilden, die der Aufbringvorrichtung zugeführt und in dieser derart egalisiert werden, so daß die in einem Aufbringstrom aufgebrachten verschiedenartigen Elemente der beiden Gruppen eine im wesentlichen rapportfreie Nutzschicht bilden. Es können auch mehrere Gruppen mit sich geometrisch unterscheidender Gestalt ausgebildeten Elementen verwendet werden. Diese Verfahrensführung eröffnet die Möglichkeit, die Nutzschicht hinsichtlich ihrer optischen Wirkung unterschiedlich zu gestalten. Die einzelnen Elemente können auch unterschiedliche Struktur und/oder Färbung aufweisen.

Nach einer weiteren vorteilhaften Ausgestaltung des Verfahrens wird vorgeschlagen, daß wenigstens ein Teil der Elemente durch Zerteilen eines Vormaterials gebildet wird. Die Elemente können als konfettiartige Elemente bezeichnet werden. Vorzugsweise werden die Elemente-aus dem Vormaterial ausgestanzt oder durch Zerschneiden des Vormaterials gebildet.

Das Vormaterial ist vorzugsweise band- oder bahnförmig. Unter einem bandförmigen Vormaterial sind auch solche Vormaterialien zu verstehen, die nicht zwingend einen rechteckigen Querschnitt aufweisen. Der Querschnitt des bandförmigen Materials kann auch kreisförmig sein. Weitere polygonale Querschnitte des bandförmigen Materials sind möglich. Beispielsweise kann das bandförmige Vormaterial einen sechseckförmigen oder achteckförmigen Querschnitt aufweisen.

Zur Vereinfachung der Zerteilung eines Vormaterials wird vorgeschlagen, daß bei einem bahnförmigen Material zunächst dieses in Längsrichtung und dann im wesentlichen quer zur Längsrichtung des Vormaterials zerteilt wird. Die Zerteilung des Vormaterials kann in wenigstens zwei aufeinanderfolgenden Zerteilungsstationen erfolgen. Die Zerteilungsstationen können entsprechende Schneideinrichtungen, insbesondere Rotationsschneidgeräte, aufweisen.

Die durch das Zerlegen des bahnförmigen Materials hergestellten Elemente haben einen im wesentlichen rechteckförmigen Querschnitt. Sollen andere Querschnitte erzielt werden, so können durch unter einem Winkel zueinander angeordnete Schneiden der Schneidgeräte erreicht werden. Entsprechendes kann auch durch die Ausbildung von Stanzwerkzeugen erreicht werden. Die Stanzwerkzeuge können beispielsweise eine wabenartige Struktur haben. Durch Stanzwerkzeuge können auch Elemente mit einem kreisförmigen Querschnitt hergestellt werden.

Um sicherzustellen, daß die Elemente zuverlässig mit der Trägerschicht verbunden werden, wird vorgeschlagen, daß das Vormaterial bzw. die Elemente eine Dicke von 3 bis 10 mm aufweist bzw. aufweisen. Vorzugsweise handelt es sich bei dem Vormaterial um einen Vliesstoff, insbesondere um einen Nadelfilz, der nach den an und für sich bekannten Herstellungsverfahren zur Herstellung eines Nadelfilzes hergestellt ist. Es wird vorgeschlagen, daß das Vormaterial ein Flächengewicht zwischen 200 und 1000 gr/m² aufweist.

Nach einer weiteren vorteilhaften Ausgestaltung des Verfahrens wird vorgeschlagen, daß wenigstens ein Teil der Elemente und/oder das Vormaterial durch Garne und/oder Zwirne gebildet ist. Bei den Elementen handelt es sich vorzugsweise um Spinnereiprodukte, die unterschiedliche Dimensionen, Strukturen und/oder Färbungen aufweisen.

Bevorzugt handelt es sich bei einem Teil der Elemente um Vorgarne, insbesondere um Streichgarnlunten. Die Vorgarne, die als Elemente für die Ausbildung der Nutzschicht vorgeschlagen werden, weisen vorzugsweise eine Stärke von etwa Nm 0,5 bis Nm 4,0 (etwa 2000 bis 250 tex) auf.

Statt Vorgarnen können auch Streichgarne als Elemente für die Ausgestaltung der Nutzschicht auf die Trägerschicht aufgebracht werden. Die Streichgarne weisen vorzugsweise eine Stärke zwischen etwa 0,5 und 5,0 Nm (etwa 2000 bis 200 tex) auf.

Nach einer weiteren vorteilhaften Ausgestaltung des Verfahrens wird vorgeschlagen, daß wenigstens ein Teil der Elemente durch Streichgarnzwirne gebildet wird. Vorzugsweise weisen die Streichgarnzwirne eine Stärke zwischen etwa 0,5/3 bis 5,0/3 Nm (etwa 6000 bis 600 tex) auf.

Die Oberflächenstruktur, der Nutzschicht wird auch in bevorzugter Weise durch Halbkammgarne und/oder Halbkammzwirne gebildet. Die Halbkammgarne weisen hierbei vorzugsweise eine Stärke zwischen etwa 2,0 und 8,0 Nm (etwa 500 bis 125 tex) auf. Die Halbkammzwirne haben vorzugsweise eine Stärke zwischen etwa 2/2 und 8/2 Nm (etwa 1000 tex und 250 tex).

Die optische und strukturelle Erscheinung der Nutzschicht kann auch dadurch beeinflußt werden, daß wenigstens ein Teil der Elemente durch textile Teile, insbesondere Gewebestücke, Vliesstoffe, gebildet wird.

Neben der durch die Kombination von Spinnereiprodukten und Nadelfilz beeinflußten Oberflächengestaltung kann auch durch geeignete Wahl der Elemente der Nutzschicht ein Vliesstoff hergestellt werden, der besonders belastbar und objektgeeignet ist, d.h. in Büros, Hotels, Gaststätten, Lokalen, Hobbyräumen, Sporthallen usw., verwendbar ist. Die Elemente bestehen aus natürlichen und/oder synthetischen Werkstoffen.

Die Farbgebung der Nutzschicht kann durch die verwendeten Elemente beeinflußt werden. So ist es beispielsweise möglich bedruckbare bzw. gefärbte Garne, insbesondere BCF-Garne, zu verwenden. Der optische und der strukturelle sowie der haptische Eindruck einer Nutzschicht wird auch durch die Dimensionierung der Elemente beeinflußt. Es wird daher erfindungsgemäß vorgeschlagen, daß die Elemente vor dem Aufbringen auf die Trägerschicht entsprechend zerkleinert werden. Vorzugsweise weisen die Elemente eine Länge von etwa 20 bis 120 mm auf.

Die Vereinigung der die Nutzschicht bildenden Elemente mit der Trägerschicht erfolgt vorzugsweise durch Vernadeln. Gemäß einem weiteren vorteilhaften Gedanken wird vorgeschlagen, daß die die Nutzschicht bildenden Elemente auf eine unverfestigte Trägerschicht aufgebracht werden. Während der Vernadelung der die Nutzschicht bildenden Elemente kann auch die unverfestigte Trägerschicht durch Vernadelung verfestigt wird. Durch diese Verfahrensvariante wird zum einen die Nutzschicht mit der Trägerschicht vereinigt und zum anderen die Trägerschicht selbst verfestigt, wodurch einevereinfachte Herstellung des flächigen Gebildes erzielt wird.

Zur Erhöhung der Festigkeit des Vliesstoffes wird vorgeschlagen, daß der Vliesstoff in einem zusätzlichen Verfahrensschritt durch chemische Bindemittel verfestigt wird.

Nach einem weiteren vorteilhaften Gedanken wird vorgeschlagen, daß die Trägerschicht auf einer der Nutzschicht gegenüberliegenden Fläche mit wenigstens einer weiteren Schicht versehen wird.

Die wenigstens eine weitere Schicht dient der Produktstabilität, der Feuerresistenz, der Leitfähigkeit oder desgleichen. Die weitere Schicht kann beispielsweise ein Spinnvliesträger aus Polypropylen mit Flammschutz sein. Als Rücken des Vliesstoffes kann auch eine zusätzliche Schicht aus PES vorhanden sein. Wird der Vliesstoff als Fliesenware ausgebildet, so kann eine zusätzliche Schwerbeschichtung aus Bitumen, APO oder ähnlichem aufgetragen werden.

Der Vliesstoff kann nachdem die Nutzschicht mit der Trägerschicht verbunden worden ist wenigstens einer Behandlung unterzogen werden. Hierbei kann der Vliesstoff einer Ausrüstung entweder durch vollbadige Imprägnierung, Bepflatschung oder einseitige Beschichtung mit einer anschließenden Trocknung und Thermofixierung im Temperaturbereich von 120 bis 160°C unterzogen werden.

Das so hergestellte flächige Gebilde, insbesondere ein Vliesstoff ist als Bahnen- und Fliesenware sowie als Wandbelag geeignet. Er ist auch als stückgefärbter Bodenbelag verwendbar.

Nach einem weiteren erfinderischen Gedanken wird ein flächiges Gebilde mit einer Trägerschicht aus einem Vliesstoff und einer Nutzschicht, die durch auf die Trägerschicht aufgebrachte Elemente gebildet ist, wobei die die Nutzschicht bildenden Elemente wenigstens mit der Trägerschicht vernadelt sind, vorgeschlagen, wobei die Nutzschicht durch eine Vielzahl von sich in ihrer geometrischen Gestalt unterscheidenden Elementen gebildet ist und die Elemente eine im wesentlichen rapportfreie Nutzschicht bilden. Dadurch, daß die Elemente sich hinsichtlich ihrer geometrischen Gestalt unterscheiden, wird eine optisch strukturiert wirkende Oberfläche der Nutzschicht erreicht. Die rapportfreie Nutzschicht eröffnet auch die Möglichkeit, daß flächige Gebilde großflächig beispielsweise als Bodenbelag zu verwenden, ohne daß eine optisch uneinheitliche Fläche entsteht.

Die Trägerschicht besteht vorzugsweise aus einem Nadelvliesstoff, der aus Polyesterfasern, auch schwer entflammbaren, Polyesterbicofasern, Polypropylenfasern, Polyamidfasern oder Polyäthylenfolien hergestellt ist.

Das flächige Gebilde zeichnet sich dadurch aus, daß die die Nutzschicht bildenden Elemente auf eine unverfestigte Trägerschicht aufgebracht werden, wobei die unverfestigte Trägerschicht während einer Vernadelung der die Nutzschicht bildenden Elemente mit der Trägerschicht verfestigt wird.

Nach einer weiteren vorteilhaften Ausgestaltung des erfindungsgemäßen flächigen Gebildes wird vorgeschlagen, daß die Nutzschicht durch wenigstens zwei Lagen von Elementen gebildet wird. Die einzelnen Elemente können in Form von länglichen Gebilden, Noppen oder Knoten ausgebildet sein. Dadurch, daß die Nutzschicht durch wenigstens zwei Lagen von Elementen gebildet ist, kann eine Hoch-Tief-Struktur erreicht werden, so daß die Oberfläche der Nutzschicht einen dreidimensionalen Eindruck erweckt.

Die Elemente können auch unterschiedlicher Färbung sein, wodurch der optische Eindruck der Oberfläche der Nutzschicht entsprechend variiert werden kann.

Gemäß einer weiteren vorteilhaften Ausgestaltung des flächigen Gebildes wird vorgeschlagen, daß wenigstens ein Teil der Elemente Fasern aufweist, die in eine Vorzugsrichtung ausgerichtet sind. Die Elemente können nadelvliesartig ausgebildet sein. Vorzugsweise weisen die nadelvliesartig ausgebildeten Elemente ein Flächengewicht zwischen 200 und 1000 gr/m² auf.

Die Elemente können eine nicht kugelförmige Gestalt haben.

Nach einer weiteren bevorzugten Ausgestaltung des Gebildes wird vorgeschlagen, daß wenigstens ein Teil der Elemente durch Garne und/oder Zwirne gebildet ist. Bei Verwendung von Garnen oder Zwirnen als Elemente wird vorgeschlagen, daß diese eine Länge von etwa 3 bis 120 mm, vorzugsweise von 3 bis 10 mm haben.

Handelt es sich bei den Elementen um Vorgarne, so wird vorgeschlagen, daß diese insbesondere eine Stärke von etwa Nm 0,5 bis Nm 4,0 aufweisen (numerische Meter).

Die Elemente können auch durch Streichgarnlunten oder durch Streichgarne und/oder durch Streichgarnzwirne gebildet sein. Alternativ oder zusätzlich können die Elemente durch Halbkammgarne gebildet sein.

Gemäß einem weiteren erfinderischen Gedanken wird eine Anlage zur Herstellung eines flächigen Gebildes, insbesondere zur Durchführung des Verfahrens nach einem der Ansprüche 1 bis 33, vorgeschlagen, wobei die Anlage eine Aufbringvorrichtung mit wenigstens einer Aufbringstation aufweist, durch die sich hinsichtlich ihrer geometrischen Gestalt unterscheidende Elemente auf eine Fläche einer Trägerschicht aufgebracht werden. Die Anlage weist auch eine Nadeleinrichtung auf, durch die wenigstens die Elemente mit der Trägerschicht vernadelt werden. Die Elemente werden auf der Fläche der Trägerschicht so abgelegt, daß diese eine im wesentlichen rapportfreie Nutzschicht bilden.

Die Anlage weist vorzugsweise eine Aufbringvorrichtung auf, die eine aerodynamische Streuvorrichtung aufweist.

Nach einer weiteren vorteilhaften Ausgestaltung der Anlage wird vorgeschlagen, daß die Aufbringvorrichtung ein Gehäuse aufweist, das einen Raum begrenzt. In den Raum mündet wenigstens ein Zufuhrkanal, der in der Nähe einer Oberwand des Gehäuses ausgebildet ist. Innerhalb des Zufuhrkanals ist eine Dosiereinrichtung angeordnet. In dem Raum, der von dem Gehäuse begrenzt wird, ist eine Egalisierungseinheit angeordnet. Die Aufbringvorrichtung weist ferner einen Austrittskanal auf. Durch den Zufuhrkanal werden die sich hinsichtlich ihrer geometrischen Gestalt unterscheidenden Elemente in die Aufbringvorrichtung eingebracht. Durch die Dosiereinrichtung erfolgt eine Mengendosierung der Elemente. Über die Egalisierungseinheit werden die Elemente hinsichtlich ihrer Verteilung vergleichmäßigt. Die so vergleichmäßigte Menge von Elementen wird aus dem Raum über einen Austrittskanal ausgetragen. Diese Elemente werden auf der Trägerschicht aufgebracht.

Für eine dosierte Mengenangabe der vergleichmäßigten Menge von Elementen auf die Trägerschicht wird vorgeschlagen, daß im Austrittskanal eine Dosiereinheit vorgesehen ist. Hierdurch kann auch das Flächengewicht der Trägerschicht eingestellt werden.

Nach einer weiteren vorteilhaften Ausgestaltung der Anlage wird vorgeschlagen, daß der Austrittskanal wenigstens einen Abschnitt aufweist, der in Form eines Verdichtungsschachtes ausgebildet ist. Dieser Verdichtungsschacht kann auch zur Einstellung des Flächengewichtes der Elemente herangezogen werden. Um sicherzustellen, daß die Elemente in dem Austrittskanal zur Austrittsmündung des Kanals transportiert werden, wird vorgeschlagen, daß der Austrittskanal wenigstens einen vibrierenden Abschnitt aufweist. Die Vibration des Abschnitts kann auch zur Verdichtung des Auftragsstroms der Elemente genutzt werden, so daß auch hierüber das Flächengewicht der Nutzschicht eingestellt werden kann. Zur Einstellung des Flächengewichtes ist der Austrittskanal in einem Abschnitt so ausgebildet, daß dessen Querschnitt veränderlich ist.

Nach einem anderen vorteilhaften Gedanken wird vorgeschlagen, daß der Austrittskanal der Anlage einen Abschnitt aufweist, der durch wenigstens zwei endlose, angetriebene Bänder gebildet ist. Die Bänder sind im Abstand zueinander und gegenüberliegend angeordnet. Die Bänder bilden eine Transportstrecke, in der die vergleichmäßigte Menge von Elementen zur Austrittsöffnung hin transportiert wird. Die Geschwindigkeit der Bänder kann eingestellt werden. Vorzugsweise ist die Geschwindigkeit der Bänder unabhängig voneinander einstellbar, so daß unterschiedliche Einflußgrößen auf die sich in der Transportstrecke befindenden Elemente ausgeübt werden können.

Vorzugsweise ist der Austrittskanal im wesentlichen vertikal angeordnet.

Nach einem weiteren vorteilhaften Gedanken wird vorgeschlagen, daß die Anlage wenigstens eine Mischeinrichtung aufweist, die mit der Aufbringvorrichtung verbunden ist. In der wenigstens einen Mischeinrichtung findet eine Vormischung der Elemente statt. Mehrere in Reihe oder parallel geschaltete Mischeinrichtungen sind gegebenenfalls zweckmäßig.

Weitere Einzelheiten und Vorteile der Erfindung werden anhand der in der Zeichnung dargestellten Ausführungsbeispiele erläutert. Es zeigen:
- Fig. 1: schematisch ein erstes Ausführungsbeispiel eines flächigen Gebildes,
- Fig. 2: ein zweites Ausführungsbeispiel eines flächigen Gebildes,
- Fig. 3: schematisch eine Anlage,
- Fig. 4: schematisch eine Aufbringvorrichtung einer Anlage und
- Fig. 5: schematisch einen Austrittskanal mit einer Transportstrecke.

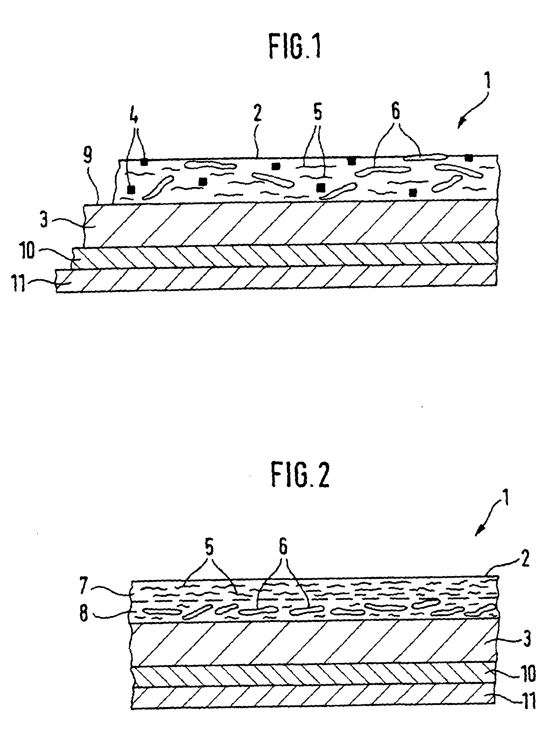

In der Fig. 1 ist schematisch ein erstes Ausführungsbeispiel eines flächigen Gebildes dargestellt. Das Gebilde weist einen mehrschichtigen Aufbau auf. Auf einer Trägerschicht 3, die aus einem mehrlagigen Vliesstoff in einer mechanischen Vliesbildungsvorrichtung hergestellt wurde, ist eine Nutzschicht 2 ausgebildet. Die Nutzschicht 2 ist durch Elemente 4, 5, 6 gebildet, die mit der Trägerschicht 3 durch Vernadeln vereinigt sind.

Die Nutzschicht 2 ist in dem dargestellten Ausführungsbeispiel durch drei sich in geometrischer Gestalt unterscheidende Elemente 4, 5, 6 gebildet. Die Elemente 4 sind in Form von Knoten ausgebildet. Die Elemente 5 sind faserartig. Die Elemente 6 sind durch ein Garn gebildet. Diese Kombination der unterschiedlichen Elemente 4, 5, 6 ist beispielhaft. Durch unterschiedliche Zusammensetzung der Elemente 4, 5, 6 können verschiedenartige Effekte im Erscheinungsbild der Nutzschicht 2 erzielt werden. Es ist nicht notwendig, daß alle Elemente 4, 5, 6 gleichzeitig auf die Trägerschicht 3 aufgebracht werden. Die Aufbringung der Elemente 4, 5, 6 kann in aufeinanderfolgenden Schritten erfolgen.

In dem dargestellten Ausführungsbeispiel nach Fig. 1 weist das Gebilde 1 zwei weitere Schichten 10, 11, die auf einer der Nutzschicht 2 gegenüberliegenden Fläche 9 der Trägerschicht 3 ausgebildet sind. Bei der Schicht 10 handelt es sich um einen Spinnvliesträger aus Polypropylen mit Flammschutz. Die Schicht 11, die auf der Schicht 10 aufgebaut ist, ist ein Spinnvliesträger aus PES. Die Schicht 11 bildet einen Rücken des Vliesstoffes 1. Das Gebilde 1 kann als Bodenbelag verwendet werden.

In der Fig. 2 ist ein weiteres Ausführungsbeispiel eines flächigen Gebildes 1 dargestellt. Das Gebilde 1 weist einen mehrschichtigen Aufbau auf. Auf einer Trägerschicht 3 ist eine Nutzschicht 2 ausgebildet. Die Nutzschicht 2 ist durch Vernadeln mit der Trägerschicht 3 verbunden. Die Nutzschicht 2 ist durch die Elemente 5, 6 gebildet. Die Elemente 6 bilden eine erste, der Trägerschicht 3 benachbarte, Lage 8. Die Elemente 5 bilden eine zweite Lage 7, die auf der ersten Lage 8 ausgebildet ist. Bei der Herstellung des Vliesstoffes 1 sind zunächst die Elemente 6 auf die Trägerschicht 3 aufgebracht worden. Die Elemente 6 haben größere Dimensionen als die Elemente 5. Auf die erste Schicht 8 sind anschließend die Elemente 5 aufgebracht worden, so daß diese auch teilweise in die Schicht 8 gelangen. Die Elemente 5 können auf die Lage 8 aufgeblasen worden sein. Fig. 2 zeigt ein bevorzugtes Ausführungsbeispiel eines Gebildes 1. Die Ausgestaltung der Lagen 7, 8 kann auch durch Elemente 5, 6 erfolgen, die vergleichbare geometrische Dimensionen haben. Die Oberflächenstruktur und/oder Farbe der Elemente 5, 6 sollte jedoch unterschiedlich sein, wodurch ein reizvoller optischer Effekt der Nutzschicht 2 erreicht werden kann.

Das Gebilde 1 weist ferner Schichten 10 und 11 auf, die aufeinandergeschichtet sind, wobei die Schicht 10 mit der Trägerschicht 3 verbunden ist.

Die sichtbare Oberfläche der Nutzschicht 2 ist im wesentlichen rapportfrei ausgebildet. Die einzelnen Lagen enthalten sich in der geometrischen Gestalt unterscheidende Elemente 4, 5, 6.

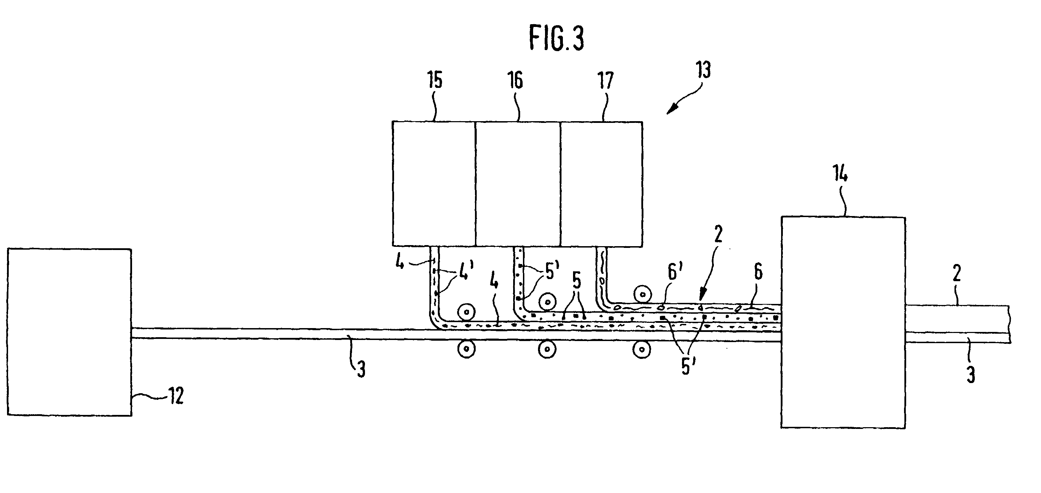

In der Fig. 3 ist schematisch eine Anlage, insbesondere zur Durchführung des Verfahrens zur Herstellung eines flächigen Gebildes dargestellt. Die Anlage umfaßt eine mechanische Vliesbildungsvorrichtung 12, durch die eine Trägerschicht 3 aus einem mehrlagigen Vliesstoff hergestellt wird. Auf die Trägerschicht 3 werden Elemente, die eine Nutzschicht 2 bilden, aufgebracht.

Die Aufbringung der Elemente erfolgt mittels einer Aufbringvorrichtung 13. Die in der Fig. 3 dargestellte Aufbringvorrichtung 13 umfaßt drei Aufbringstationen, durch die Elemente 4, 4'; 5, 5' bzw. 6, 6' lageweise auf die Trägerschicht 3 aufgebracht werden. Die Elemente 4, 4'; 5, 5' und 6, 6' sind vorzugsweise von unterschiedlicher geometrischer Gestalt. Die aus einem unverfestigten Vliesstoff bestehende Trägerschicht 3 mit den lageweise auf der Trägerschicht 3 aufgebrachten Elementen 4, 4'; 5, 5' und 6, 6' wird anschließend einer Nadeleinrichtung 14 zugeführt, in der die die Nutzschicht 2 bildenden Elemente wenigstens mit der Trägerschicht 3 vernadelt werden.

In der Aufbringstation 15 kann beispielsweise ein erstes Gemisch enthaltend die Elemente 4 und 4' auf die Trägerschicht 2 gelegt werden. Durch die Aufbringstation 16 wird ein zweites Gemisch enthaltend die Elemente 5 und 5' auf die Trägerschicht 2 mit den Elementen 4 aufgestreut. Durch die Aufbringstation 17 wird ein drittes Gemisch enthaltend die Elemente 6 und 6' auf die Trägerschicht 3 mit den Elementen 4, 4' und 5; 5' aufgeblasen.

Die Anzahl der Aufbringstationen und die Art und Weise der Aufbringung der Elemente, die die Nutzschicht bilden, ist abhängig von dem gewünschten Effekt bzw. den Eigenschaften der Nutzschicht. So können beispielsweise mehrere Elemente 4, 5 und 6 mittels einer einzigen Aufbringstation auf die Trägerschicht 3 aufgebracht werden.

In der Nadeleinrichtung 14 werden die Elemente, die die Nutzschicht bilden, mit der Trägerschicht 3 vernadelt. Die Nadeleinrichtung kann mehrere Nadelstühle aufweisen. Zwischen den einzelnen Vernadelungsvorgängen können weitere Behandlungsschritte erfolgen.

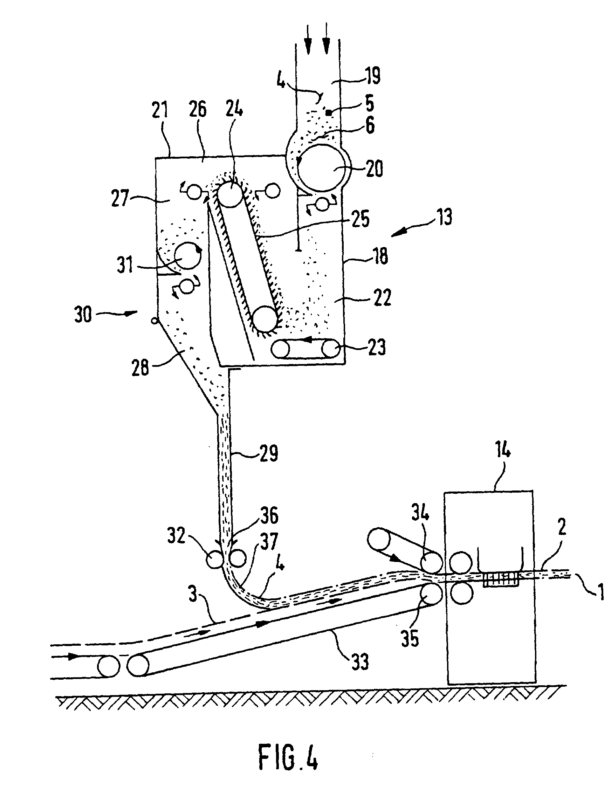

In der Fig. 4 ist ein Teil einer Anlage zur Herstellung eines flächigen Gebildes mit einer Nutzschicht und einer Trägerschicht dargestellt. Die Anlage umfaßt eine Aufbringeinrichtung 13, durch die Elemente 4, 5, 6 die eine Nutzschicht 2 bilden, auf eine Trägerschicht 3, die in der Fig. 4 schematisch angedeutet ist, aufgebracht werden. Die Aufbringvorrichtung 13 weist ein Gehäuse 18 mit dem einem Zufuhrkanal 19 auf.

Durch den Zufuhrkanal 19 erfolgt eine Speisung der Aufbringvorrichtung mit den sich bezüglich der Gestalt geometrisch unterscheidenden Elementen 4, 5, 6. Innerhalb des Zufuhrkanals 19 ist eine Dosiereinrichtung 20 angeordnet, durch die eine Mengendosierung der Elemente erfolgt.

Der Zufuhrkanal und die Dosiereinrichtung sind in der Nähe einer Oberwand 21 des Gehäuses 18 ausgebildet. Die Elemente 4, 5, 6, die die Nutzschicht 2 bilden, fallen aufgrund der Schwerkraft durch den Zufuhrkanal und die Dosiereinrichtung in einen Raum 22, der durch das Gehäuse 18 begrenzt ist.

Innerhalb des Raumes 22 erfolgt eine Verteilung und Vereinheitlichung der zugeführten Elemente 4, 5, 6. Hierzu ist innerhalb des Gehäuses 18 eine Transporteinheit 23 vorgesehen, die die Elemente 4, 5, 6 zu einer Egalisierungseinrichtung 24 fördert.

Die Egalisierungseinrichtung 24 weist ein endloses kammartiges Band 25 auf. Die Elemente werden durch die Egalisierungseinrichtung 24 zu einer in der Nähe der Oberwand 21 ausgebildeten Durchgangsöffnung 26 gefördert.

Während des Transportes der Elemente in die Nähe der Durchgangsöffnung 26 werden die Elemente teilweise von dem endlosen, kammartigen Band 25 mittels nicht dargestellter Abschlagwalzen abgeschlagen, so daß die Elemente zu einer tieferen Position des kammartigen Bandes 25 gelangen oder auf die Transporteinheit 23 zurückfallen. Hierdurch wird eine Vereinheitlichung der Verteilung der Elemente mit unterschiedlicher geometrischer Gestalt erreicht.

Die durch das kammartige Band 25 geförderten Elemente 4, 5, 6 gelangen über die Durchgangsöffnung 26.

In einen ersten Abschnitt 27 eines im wesentlichen vertikal verlaufenden Austrittskanals 30. Innerhalb des ersten Abschnitts 27 ist eine Dosiereinheit 31 vorgesehen.

Die Elemente 4, 5, 6 gelangen über die Dosiereinheit 31 in einen zweiten Abschnitt 28 des Austrittskanals 30. Der zweite Abschnitt 28 ist im wesentlichen trichterförmig ausgebildet. Er mündet in einen dritten Abschnitt 29 des Austrittskanals 30. Der dritte Abschnitt 29 ist im wesentlichen in Form eines Verdichterschachts ausgebildet. Vor der Mündung 36 des dritten Abschnitts 29 ist eine Austrageinheit 32 vorgesehen, durch die die Elemente 4, 5, 6 auf die Trägerschicht 3 aufgetragen werden.

Der Abschnitt 29 des Austrittskanals 30 ist vorzugsweise so ausgebildet, daß dieser vibriert, so daß die Elemente 4, 5 und 6 durch die Vibration verdichtet werden und ein Auftragstrom 37 bilden.

Die geschichtete Struktur umfassend die Trägerschicht 3 und die Nutzschicht 2 werden mittels einer Transporteinheit 33 zur Nadeleinrichtung 14 transportiert. Vor der Nadeleinrichtung 14 wird die Nutzschicht 2 und die Trägerschicht 3 zwischen den Walzen 34, 35, die vertikal fluchtend angeordnet sind, geführt. In der Nadeleinrichtung 14 erfolgt eine Vernadelung der die Nutzschicht 2 bildenden Elemente 4 mit der Trägerschicht 3.

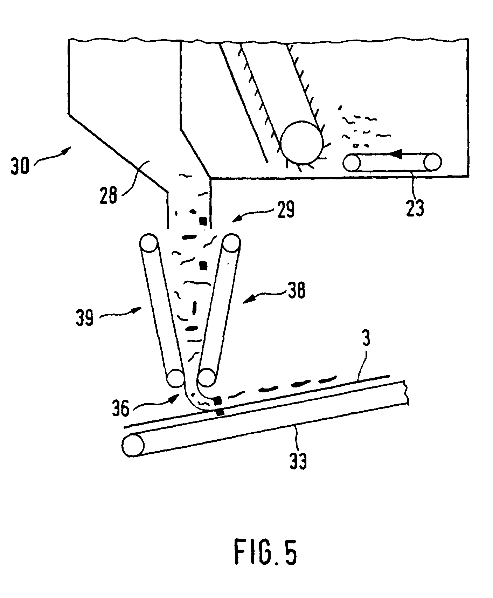

Fig. 5 zeigt schematisch einen Abschnitt 29 eines Austrittskanals 30. Der Abschnitt 29 ist durch zwei in Abstand zueinander angeordnete Bänder 38, 39 gebildet. Die Bänder 38, 39 liegen gegenüber. Zwischen den in gleicher Richtung laufenden Bändern werden die Elemente 4, 5 und 6 zur Mündung 36 transportiert. Die Bänder 38, 39 sind mittels nicht dargestellter Antriebseinheiten antreibbar. Die Geschwindigkeit der einzelnen Bänder 38, 39 kann unabhängig voneinander eingestellt werden. Die Bänder 38, 39 sind vorzugsweise so angeordnet, daß der Abstand zwischen diesen zur Mündung 36 hin abnimmt. Die Bänder 38, 39 bilden eine Transportstrecke, innerhalb der die Elemente 4, 5 und 6 verdichtet werden.

Die Bänder 38, 39 können zur besseren Vorverdichtung des Transportgutes (Elemente 4, 5, 6) in eine Pendelbewegung versetzt werden.

### Bezugszeichen

- 1: Vliesstoff
- 2: Nutzschicht
- 3: Trägerschicht
- 4, 5, 6: Elemente
- 7, 8: Lage
- 9: Fläche
- 10, 11: Schicht
- 12: Vliesbildungsvorrichtung
- 13: Aufbringvorrichtung
- 14: Nadeleinrichtung
- 15, 16, 17: Aufbringstation
- 18: Gehäuse
- 19: Zufuhrkanal
- 20: Dosiereinrichtung
- 21: Oberwand
- 22: Raum
- 23: Transporteinheit
- 24: Egalisierungseinrichtung
- 25: Band
- 26: Durchgangsöffnung
- 27: erster Abschnitt
- 28: zweiter Abschnitt
- 29: dritter Abschnitt
- 30: Austrittskanal
- 31: Dosiereinheit
- 32: Austragseinheit
- 33: Transporteinheit
- 34, 35: Walzen
- 36: Mündung
- 37: Aufbringstrom
- 38, 39: Bänder

## Patentansprüche

1. Verfahren zum Herstellen eines Bodenbelags (1), der eine Trägerschicht (3) aus einem Vliesstoff aufweist, auf der eine sichtbare Nutzschicht (2) gebildet ist,
mit folgenden Schritten:
a) Einbringen von Elementen (4, 5, 6) mit sich geometrisch unterscheidender Gestalt, die wenigstens teilweise die Nutzschicht (2) bilden, in eine Aufbringvorrichtung (13), wobei die verschiedenartigen Elemente (4, 5, 6) wenigstens zwei sich unterscheidende Gruppen bilden, die der Aufbringvorrichtung (13) zugeführt und in dieser derart egalisiert werden, daß die in einem Auftragstrom (37) aufgebrachten verschiedenartigen Elemente (4, 5, 6) der beiden Gruppen eine im wesentlichen rapportfreie Nutzschicht (2) bilden;
b) Vernadeln wenigstens der die Nutzschicht (2) bildenden Elemente (4, 5, 6) mit der Trägerschicht (3).

2. Verfahren nach Anspruch 1, bei dem die verschiedenartigen Elemente (4, 5, 6) entsprechend wenigstens einem vorgegebenen Mengenverhältnis in die Aufbringvorrichtung (13) eingebracht werden.

3. Verfahren nach Anspruch 1 oder 2, bei dem die Elemente (4, 5, 6) in wenigstens einem Abschnitt (28, 29) eines Austrittskanals (30) der Aufbringvorrichtung (13) zu dem Aufbringstrom (37) verdichtet werden.

4. Verfahren nach Anspruch 3, bei dem die Elemente (4, 5, 6) in einem trichterförmigen Abschnitt (28, 29) des Austrittskanals (30) verdichtet werden.

5. Verfahren nach Anspruch 3 oder 4, bei dem die Elemente (4, 5, 6) dosiert in den die Elemente (4, 5, 6) verdichtenden Abschnitt (28, 29) eingebracht werden.

6. Verfahren nach einem der Ansprüche 1 bis 5, bei dem die Elemente (4, 5, 6) des Aufbringstroms (37) auf die Trägerschicht (3) gelegt und/oder gestreut und/oder geblasen werden.

7. Verfahren nach einem der Ansprüche 1 bis 6, bei dem wenigstens ein Teil der Elemente (4, 5, 6) durch Zerteilen eines Vormaterials gebildet wird.

8. Verfahren nach Anspruch 7, bei dem die Elemente (4, 5, 6) aus dem Vormaterial ausgestanzt werden.

9. Verfahren nach Anspruch 7, bei dem die Elemente (4, 5, 6) durch Zerschneiden des Vormaterials gebildet werden.

10. Verfahren nach Anspruch 7, 8 oder 9, bei dem ein band- oder bahnförmiges Vormaterial zerteilt wird.

11. Verfahren nach Anspruch 10, bei dem ein bahnförmiges Vormaterial zunächst in Längsrichtung und dann im wesentlichen quer zur Längsrichtung des Vormaterials zerteilt wird.

12. Verfahren nach einem der Ansprüche 7 bis 11, bei dem das Vormaterial eine Dicke von 3 bis 10 mm aufweist.

13. Verfahren nach einem der Ansprüche 7 bis 12, bei dem das Vormaterial ein Vliesstoff, insbesondere ein Nadelfilz, ist.

14. Verfahren nach Anspruch 13, bei dem ein Vormaterial mit einem Flächengewicht zwischen 200 und 1000 g/m2 zerteilt wird.

15. Verfahren nach einem der Ansprüche 1 bis 9, bei dem wenigstens ein Teil der Elemente (4, 5, 6) und/oder das Vormaterial durch Garne und/oder Zwirne gebildet wird.

16. Verfahren nach Anspruch 15, bei dem wenigstens ein Teil der Elemente (4, 5, 6) durch Vorgarne gebildet wird.

17. Verfahren nach Anspruch 16, bei dem wenigstens ein Teil der Elemente (4, 5, 6) durch Streichgarnlunten gebildet wird.

18. Verfahren nach Anspruch 16 oder 17, bei dem wenigstens ein Teil der Elemente (4, 5, 6) durch Vorgarne mit einer Stärke von etwa 0,5 Nm bis 4,0 Nm gebildet wird.

19. Verfahren nach Anspruch 15, bei dem wenigstens ein Teil der Elemente (4, 5, 6) durch Streichgarne mit einer Stärke zwischen etwa 0,5 Nm und 5,0 Nm gebildet wird.

20. Verfahren nach Anspruch 15, bei dem wenigstens ein Teil der Elemente (4, 5, 6) durch Streichgarnzwirne gebildet wird.

21. Verfahren nach Anspruch 20, bei dem wenigstens ein Teil der Elemente (4, 5,6) durch Streichgarnzwirne mit einer Stärke zwischen etwa 0,5/3 Nm bis 5,0/3 Nm gebildet wird.

22. Verfahren nach Anspruch 15, bei dem wenigstens ein Teil der Elemente (4, 5, 6) durch Halbklammgarne mit einer Stärke zwischen etwa 2,0 Nm und 8,0 Nm gebildet wird.

23. Verfahren nach Anspruch 15, bei dem wenigstens ein Teil der Elemente (4, 5, 6) durch Halbkammzwirne gebildet wird.

24. Verfahren nach Anspruch 23, bei dem wenigstens ein Teil der Elemente (4, 5, 6) durch Halbkammgarnzwirne mit einer Stärke zwischen etwa 2/2 Nm und 8/2 Nm gebildet wird.

25. Verfahren nach einem der Ansprüche 1 bis 11, bei dem wenigstens ein Teil der Elemente (4, 5, 6) durch textile Teile gebildet wird.

26. Verfahren nach Anspruch 25, bei dem wenigstens ein Teil der Elemente (4, 5, 6) durch Gewebestücke gebildet wird.

27. Verfahren nach einem der Ansprüche 1 bis 26, bei dem die Elemente (4, 5, 6) aus natürlichen und/oder synthetischen Werkstoffen bestehen.

28. Verfahren nach einem der Ansprüche 1 bis 27, bei dem die die Nutzschicht (2) bildenden Elemente (4, 5, 6) auf eine unverfestigte Trägerschicht (3) aufgebracht werden.

29. Verfahren nach Anspruch 28, bei dem die unverfestigte Trägerschicht (3) während einer Vernadelung der Elemente (4, 5, 6) mit der Trägerschicht (3) verfestigt wird.

30. Verfahren nach einem der Ansprüche 1 bis 29, bei dem die Trägerschicht (3) und/oder die Nutzschicht (2) durch chemische Bindemittel verfestigt wird.

31. Verfahren nach einem der Ansprüche 1 bis 30, bei dem die Trägerschicht (3) auf einer der Nutzschicht (2) gegenüberliegenden Fläche (9) mit wenigstens einer weiteren Schicht (10, 11) versehen wird.

32. Bodenbelag mit einer Trägerschicht (3) aus einem Vliesstoff und einer sichtbaren Nutzschicht (2), die durch auf die Trägerschicht (3) aufgebrachte Elemente (4, 5, 6) gebildet ist, wobei die die Nutzschicht (2) bildenden Elemente (4, 5, 6) wenigstens mit der Trägerschicht (3) vernadelt sind, **dadurch gekennzeichnet; daß** die Nutzschicht (3) durch eine Vielzahl von sich in ihrer geometrischen Gestalt unterscheidenden Elementen (4, 5, 6) ausgewählt aus der Gruppe von Garnen, Zwirnen, Vorgarnen, Streichgarnlunten, Streichgarnen, Hubgarnen und/oder nadelvliesartigen Elementen gebildet ist, wobei die Elemente (4, 5, 6) eine im wesentlichen rapportfreie Nutzschicht (2) bilden.

33. Bodenbelag nach Anspruch 32, **dadurch gekennzeichnet, daß** die die Nutzschicht (2) bildenden Elemente (4, 5, 6) auf eine unverfestigte Trägerschicht (3) aufgebracht werden, wobei die unverfestigte Trägerschicht (3) während einer Vernadelung der die Nutzschicht (2) bildenden Elemente (4, 5, 6) mit der Trägerschicht (3) verfestigt wird.

34. Bodenbelag nach Anspruch 32 oder 33, **dadurch gekennzeichnet, daß** die Nutzschicht (2) durch wenigstens zwei Lagen von Elementen (4, 5, 6) gebildet ist.

35. Bodenbelag nach Anspruch 32, 33 oder 34, **dadurch gekennzeichnet, daß** wenigstens ein Teil der Elemente (4, 5, 6) Fasern aufweist, die in einer Vorzugsrichtung ausgerichtet sind.

36. Bodenbelag nach einem der Ansprüche 32 bis 35, **dadurch gekennzeichnet, daß** die nadelvliesartig ausgebildeten Elemente (4, 5, 6) ein Flächengewicht zwischen 200 und 1000 g/m² haben.

37. Bodenbelag nach einem der Ansprüche 32 bis 36, **dadurch gekennzeichnet, daß** wenigstens ein Teil der Elemente (4, 5, 6) durch Vorgarne mit einer Stärke von etwa 0,5 Nm bis 4,0 Nm, gebildet ist.

38. Bodenbelag nach einem der Ansprüche 32 bis 36, **dadurch gekennzeichnet, daß** wenigstens ein Teil der Elemente (4, 5, 6) durch Streichgarne mit einer Stärke zwischen etwa 0,5 Nm und 5,0 Nm, und/oder durch Streichgarnzwirne mit einer Stärke zwischen etwa 0,5/3 bis 5,0/3 Nm, gebildet ist.

39. Bodenbelag nach einem der Ansprüche 32 bis 36, **dadurch gekennzeichnet, daß** wenigstens ein Teil der Elemente (4, 5, 6) durch Halbkammgarne mit einer Stärke zwischen etwa 2,0 und 8,0 Nm, und/oder durch Halbkammzwirne mit einer Stärke zwischen etwa 2/2 und 8/2 Nm, gebildet ist.

40. Bodenbelag nach einem der Ansprüche 32 bis 39, **dadurch gekennzeichnet, daß** wenigstens ein Teil der Elemente (4, 5, 6) eine Länge von etwa 3 bis 120 mm, vorzugsweise von etwa 3 bis 10 mm, haben.

41. Anlage zur Herstellung eines Bodenbelags mit einer Aufbringvorrichtung (13) mit wenigstens einer Aufbringstation (15, 16, 17), **dadurch gekennzeichnet, daß** die Aufbringvorrichtung (13) ein Gehäuse (18), das einen Raum (22) begrenzt, wenigstens einen in der Nähe einer Oberwand (21) in den Raum (22) mündenden Zufuhrkanal (19), eine Dosiereinrichtung (20), die im Zufuhrkanal (19) angeordnet ist, eine Egalisierungseinheit (24), die im Raum (22) angeordnet ist, und einen Austrittskanal (30) aufweist, in dem eine Dosiereinheit (31) vorgesehen ist, wobei der Austrittskanal (30) wenigstens einen Abschnitt (28, 29) aufweist, der in Form eines Verdichtungsschachtes ausgebildet ist, so daß geometrisch unterschiedliche Elemente (4, 5, 6) auf eine Fläche (9) unter Ausbildung einer im wesentlichen rapportfreie Nutzschicht (2) auf die Trägerschicht (3) aufgebracht werden und diese mittels wenigstens einer Nadeleinrichtung (14, 15) mit der Trägerschicht (3) vernadelt werden.

42. Anlage nach Anspruch 41, **dadurch gekennzeichnet, daß** die Aufbringvorrichtung (13) eine aerodynamische Streuvorrichtung ist.

43. Anlage nach Anspruch 41 oder 42, **dadurch gekennzeichnet, daß** der Austrittskanal (30) wenigstens einen vibrierenden Abschnitt (29) aufweist.

44. Anlage nach Anspruch 41, 42 oder 43, **dadurch gekennzeichnet, daß** der Austrittskanal (30) einen Abschnitt (29) aufweist, dessen Querschnitt veränderlich ist.

45. Anlage nach einem der Ansprüche 41 bis 44, **dadurch gekennzeichnet, daß** der Austrittskanal (30) einen Abschnitt (29) aufweist, der durch wenigstens zwei endlose, angetriebene Bänder (38, 39) gebildet ist, die im Abstand zueinander und gegenüberliegend angeordnet sind.

46. Anlage nach Anspruch 45, **dadurch gekennzeichnet, daß** die Geschwindigkeit der Bänder (38, 39) einstellbar ist.

47. Anlage nach einem der Ansprüche 41 bis 45, **dadurch gekennzeichnet, daß** der Austrittskanal (30) im wesentlichen vertikal angeordnet ist.

48. Anlage nach einem der Ansprüche 41 bis 47, **dadurch gekennzeichnet, daß** wenigstens eine Mischeinrichtung mit der Aufbringeinrichtung (13) verbunden ist.

## Claims

1. A method of producing a floor covering (1) which has a base layer (3) of a non-woven material, on which is formed a visible wearing layer (2), comprising the following steps:
a) introducing elements (4, 5, 6) of geometrically differing configuration which at least partially form the wearing layer (2) into an applicator apparatus (13), wherein the various elements (4, 5, 6) form at least two mutually different groups which are fed to the applicator apparatus (13) and equalised therein in such a way that the various elements (4, 5, 6) of the two groups, which elements are applied in an application flow (37), form a substantially repeat-free wearing layer (2); and
b) needling at least the elements (4, 5, 6) forming the wearing layer (2) to the base layer (3).

2. A method according to claim 1 wherein the various elements (4, 5, 6) are introduced into the applicator apparatus (13) in accordance with at least one predetermined quantitative ratio.

3. A method according to claim 1 or claim 2 wherein the elements (4, 5, 6) are compacted to form the application flow (37) in at least one portion (28, 29) of a discharge passage (30) of the applicator apparatus (13).

4. A method according to claim 3 wherein the elements (4, 5, 6) are compacted in a funnel-shaped portion (28, 29) of the discharge passage (30).

5. A method according to claim 3 or claim 4 wherein the elements (4, 5, 6) are introduced metredly into the portion (28, 29) for compacting the elements (4, 5, 6).

6. A method according to one of claims 1 to 5 wherein the elements (4, 5, 6) of the application flow (37) are laid and/or scattered and/or blown on to the base layer (3).

7. A method according to one of claims 1 to 6 wherein at least a part of the elements (4, 5, 6) is formed by dividing a preliminary material.

8. A method according to claim 7 wherein the elements (4, 5, 6) are stamped out of the preliminary material.

9. A method according to claim 7 wherein the elements (4, 5, 6) are formed by cutting up the preliminary material.

10. A method according to claim 7, claim 8 or claim 9 wherein a preliminary material in band or web form is divided.

11. A method according to claim 10 wherein a preliminary material in web form is divided firstly in the longitudinal direction and then substantially transversely with respect to the longitudinal direction of the preliminary material.

12. A method according to one of claims 7 to 11 wherein the preliminary material is from 3 to 10 mm in thickness.

13. A method according to one of claims 7 to 12 wherein the preliminary material is a non-woven material, in particular a needled felt.

14. A method according to claim 13 wherein a preliminary material of a weight in relation to area of between 200 and 1000 g/m² is divided.

15. A method according to one of claims 1 to 9 wherein at least a part of the elements (4, 5, 6) and/or the preliminary material is formed by yarns and/or threads.

16. A method according to claim 15 wherein at least a part of the elements (4, 5, 6) is formed by rovings.

17. A method according to claim 16 wherein at least a part of the elements (4, 5, 6) is formed by carded yarn slivers.

18. A method according to claim 16 or claim 17 wherein at least a part of the elements (4, 5, 6) is formed by rovings of a weight of about 0.5 Nm to 4.0 Nm.

19. A method according to claim 15 wherein at least a part of the elements (4, 5, 6) is formed by carded yarns of a weight of between about 0.5 Nm and 5.0 Nm.

20. A method according to claim 15 wherein at least a part of the elements (4, 5, 6) is formed by carded yarn threads.

21. A method according to claim 20 wherein at least a part of the elements (4, 5, 6) is formed by carded yarn threads of a weight of between 0.5/3 Nm to 5.0/3 Nm.

22. A method according to claim 15 wherein at least a part of the elements (4, 5, 6) is formed by half-worsted yarns of a weight of between 2.0 Nm and 8.0 Nm.

23. A method according to claim 15 wherein at least a part of the elements (4, 5, 6) is formed by half-worsted threads.

24. A method according to claim 23 wherein at least a part of the elements (4, 5, 6) is formed by half-worsted yarn threads of a weight of between about 2/2 Nm and 8/2 Nm.

25. A method according to one of claims 1 to 11 wherein at least a part of the elements (4, 5, 6) is formed by textile parts.

26. A method according to claim 25 wherein at least a part of the elements (4, 5, 6) is formed by woven portions.

27. A method according to one of claims 1 to 26 wherein the elements (4, 5, 6) comprise natural and/or synthetic materials.

28. A method according to one of claims 1 to 27 wherein the elements (4, 5, 6) forming the wearing layer (2) are applied to an unconsolidated base layer (3).

29. A method according to claim 28 wherein the unconsolidated base layer (3) is consolidated during needling of the elements (4, 5, 6) to the base layer (3).

30. A method according to one of claims 1 to 29 wherein the base layer (3) and/or the wearing layer (2) are consolidated by chemical binding agents.

31. A method according to one of claims 1 to 30 wherein the base layer (3), on a surface (9) in opposite relationship to the wearing layer (2), is provided with at least one further layer (10, 11).

32. A floor covering comprising a base layer (3) of a non-woven material and a visible wearing layer (2) which is formed by elements (4, 5, 6) applied to the base layer (3), wherein the elements (4, 5, 6) forming the wearing layer (2) are needled at least to the base layer (3), **characterised in that** the wearing layer (3) is formed by a plurality of elements (4, 5, 6) which differ from each other in respect of their geometrical configuration, selected from the group of yarns, threads, rovings, carded yarn slivers, carded yarns, lift yarns and/or elements of needled non-woven fabric type, wherein the elements (4, 5, 6) form a substantially repeat-free wearing layer (2).

33. A floor covering according to claim 32 **characterised in that** the elements (4, 5, 6) forming the wearing layer (2) are applied to an unconsolidated base layer (3), wherein the unconsolidated base layer (3) is consolidated during an operation of needling the elements (4, 5, 6) forming the wearing layer (2) to the base layer (3).

34. A floor covering according to claim 32 or claim 33 **characterised in that** the wearing layer (2) is formed by at least two layers of elements (4, 5, 6).

35. A floor covering according to claim 32, claim 33 or claim 34 **characterised in that** at least a part of the elements (4, 5, 6) has fibres which are oriented in a preferential direction.

36. A floor covering according to one of claims 32 to 35 **characterised in that** the elements (4, 5, 6) of needled non-woven material type are of a weight in relation to area of between 200 and 1000 g/m².

37. A floor covering according to one of claims 32 to 36 **characterised in that** at least a part of the elements (4, 5, 6) is formed by rovings of a weight of about 0.5 Nm to 4.0 Nm.

38. A floor covering according to one of claims 32 to 36 **characterised in that** at least a part of the elements (4, 5, 6) is formed by carded yarns of a weight of between about 0.5 Nm and 5.0 Nm and/or by carded yarn threads of a weight of between about 0.5/3 to 5.0/3 Nm.

39. A floor covering according to one of claims 32 to 36 **characterised in that** at least a part of the elements (4, 5, 6) is formed by half-worsted yarns of a weight of between about 2.0 and 8.0 Nm and/or by half-worsted threads of a weight of between about 2/2 and 8/2 Nm.

40. A floor covering according to one of claims 32 to 39 **characterised in that** at least a part of the elements (4, 5, 6) are of a length of about 3 to 120 mm, preferably about 3 to 10 mm.

41. An arrangement for producing a floor covering comprising an applicator apparatus (13) having at least one applicator station (15, 16, 17), **characterised in that** the applicator apparatus (13) has a housing (18) which delimits a space (22), at least one feed passage (19) opening into the space (22) in the proximity of a top wall (21), a metering device (20) arranged in the feed passage (19), an equalising unit (24) arranged in the space (22), and a discharge passage (30) in which a metering unit (31) is provided, wherein the discharge passage (30) has at least one portion (28, 29) which is in the form of a compacting shaft so that geometrically different elements (4, 5, 6) are applied to the base layer (3) to a surface (9) forming a substantially repeat-free wearing layer (2) and said elements are needled to the base layer (3) by means of at least one needling device (14, 15).

42. An arrangement according to claim 41 **characterised in that** the applicator apparatus (13) is an aerodynamic scattering apparatus.

43. An arrangement according to claim 41 or claim 42 **characterised in that** the discharge passage (30) has at least one vibrating portion (29).

44. An arrangement according to claim 41, claim 42 or claim 43 **characterised in that** the discharge passage (30) has a portion (29) whose cross-section is variable.

45. An arrangement according to one of claims 41 to 44 **characterised in that** the discharge passage (30) has a portion (29) formed by at least two endless driven belts (38, 39) which are arranged in mutually spaced oppositely disposed relationship.

46. An arrangement according to claim 45 **characterised in that** the speed of the belts (38, 39) is adjustable.

47. An arrangement according to one of claims 41 to 45 **characterised in that** the discharge passage (30) is arranged substantially vertically.

48. An arrangement according to one of claims 41 to 47 **characterised in that** at least one mixing device is connected to the applicator apparatus (13).

## Revendications

1. Procédé de fabrication d'un revêtement de sol (1) qui présente une couche support (3) constituée d'une nappe non-tissée, sur laquelle est formée une couche utile visible (2), présentant les étapes suivantes :
(a) amener des éléments (4, 5, 6) de forme géométrique différente qui forment au moins partiellement la couche utile (2) dans un dispositif d'application (13), les éléments différents (4, 5, 6) formant au moins deux groupes qui diffèrent, sont amenés au dispositif d'application (13) et y sont égalisés de façon que les éléments différents (4, 5, 6) des deux groupes appliqués dans un flux d'apport (37) forment une couche utile (2) sensiblement sans rapport d'armure ;
(b) aiguilleter au moins les éléments (4, 5, 6) formant la couche utile (2) avec la couche support (3).

2. Procédé selon la revendication 1, dans lequel les. éléments différents (4, 5, 6) sont amenés dans le dispositif d'application (13) en fonction d'au moins un rapport de quantité prescrit.

3. Procédé selon la revendication 1, dans lequel les éléments (4, 5, 6) sont comprimés dans au moins un tronçon (28, 29) d'un canal de sortie (30) du dispositif d'application (13) pour donner le flux d'application (37).

4. Procédé selon la revendication 3, dans lequel les éléments (4, 5, 6) sont comprimés dans un tronçon (28, 29) en forme d'entonnoir du canal de sortie (30).

5. Procédé selon la revendication 3 ou 4, dans lequel les éléments (4, 5, 6) sont amenés dosés dans le tronçon (28, 29) qui compriment les éléments (4, 5, 6).

6. Procédé selon l'une des revendications 1 à 5, dans lequel les éléments (4, 5, 6) du flux d'application (37) sont déposés et/ou dispersés et/ou soufflés sur la couche support (3).

7. Procédé selon l'une des revendications 1 à 6, dans lequel au moins une partie des éléments (4, 5, 6) est formée par division d'un matériau précurseur.

8. Procédé selon la revendication 7, dans lequel les éléments (4, 5, 6) sont obtenus par poinçonnage à partir du matériau précurseur.

9. Procédé selon la revendication 7, dans lequel les éléments (4, 5, 6) sont formés par découpage du matériau précurseur.

10. Procédé selon la revendication 7, 8 ou 9, dans lequel on divise un matériau précurseur en forme de bande.

11. Procédé selon la revendication 10, dans lequel on divise tout d'abord un matériau précurseur en forme de bande selon la direction longitudinale puis selon une direction sensiblement transversale par rapport à la direction longitudinale du matériau précurseur.

12. Procédé selon l'une des revendications 7 à 11, dans lequel le matériau précurseur présente une épaisseur de 3 à 10 mm.

13. Procédé selon l'une des revendications 7 à 12, dans lequel le matériau précurseur est une nappe non-tissée, en particulier un feutre aiguilleté.

14. Procédé selon la revendication 13, dans lequel on divise un matériau précurseur d'un poids de surface valant entre 200 et 1000 g/m².

15. Procédé selon l'une des revendications 1 à 9, dans lequel au moins une partie des éléments (4, 5, 6) et/ou le matériau précurseur sont formés par des fils et/ou des retors.

16. Procédé selon la revendication 15, dans lequel au moins une partie des éléments (4, 5, 6) est formée par des précurseurs de fil.

17. Procédé selon la revendication 16, dans lequel au moins une partie des éléments (4, 5, 6) est formée par des mèches de banc à broches.

18. Procédé selon la revendication 16 ou 17, dans lequel au moins une partie des éléments (4, 5, 6) est formée par des précurseurs de fil d'un numéro métrique valant environ 0,5 Nm à 4,5 Nm.

19. Procédé selon la revendication 15, dans lequel au moins une partie des éléments (4, 5, 6) est formée par des mèches de numéro métrique valant environ 0,5 Nm à 5,0 Nm.

20. Procédé selon la revendication 15, dans lequel au moins une partie des éléments (4, 5, 6) est formée par des doublages de mèche.

21. Procédé selon la revendication 20, dans lequel au moins une partie des éléments (4, 5, 6) est formée par des doublages de mèche de numéro métrique valant environ 0,5/3 Nm à 5,0/3 Nm.

22. Procédé selon la revendication 15, dans lequel au moins une partie des éléments (4, 5, 6) est formée par des fils cardés-peignés d'un numéro métrique valant environ 2,0 Nm à 8,0 Nm.

23. Procédé selon la revendication 15, dans lequel au moins une partie des éléments (4, 5, 6) est formée par des retors cardés-peignés.

24. Procédé selon la revendication 23, dans lequel au moins une partie des éléments (4, 5, 6) est formée par des retors cardés-peignés d'un numéro métrique valant environ 2/2 Nm à 8/2 Nm.

25. Procédé selon l'une des revendications 1 à 11, 4ans lequel au moins une partie des éléments (4, 5, 6) est formée par des parties textiles.

26. Procédé selon la revendication 25, dans lequel au moins une partie des éléments (4, 5, 6) est formée par des. morceaux de tissu.

27. Procédé selon l'une des revendications 1 à 26, dans lequel les éléments (4, 5, 6) sont constitués de matériaux naturels et/ou synthétiques.

28. Procédé selon l'une des revendications 1 à 27, dans lequel les éléments (4, 5, 6) formant la couche utile (2) sont appliqués sur une couche support (3) non consolidée.

29. Procédé selon la revendication 28, dans lequel dans la couche support (3) non consolidée est consolidée pendant un aiguilletage des éléments (4, 5, 6) avec la couche support (32).

30. Procédé selon l'une des revendications 1 à 29, dans lequel la couche support (3) et/ou la couche utile (2) sont consolidées par des liants chimiques.

31. Procédé selon l'une des revendications 1 à 30, dans lequel la couche support (3) est munie d'au moins une autre couche (10, 11) sur une surface (9) opposée à la couche utile (2).

32. Revêtement de sol comportant une couche support (3) constituée d'une nappe non tissée et une couche utile visible (2) qui est formée par des éléments (4, 5, 6) appliqués sur la couche support (3), dans lequel les éléments (4, 5, 6) formant la couche utile (25) sont aiguilletés au moins avec la couche support (3), **caractérisé par le fait que** la couche utile (2) est formée par une pluralité d'éléments (4, 5, 6), de forme géométrique différente, choisis dans le groupe constitué de fils, retors, précurseurs de fil, mèches de banc à broches, mèches d'étirage, filés de levée et/ou éléments de toute nappe aiguilletée, les éléments (4, 5, 6) formant une couche utile (2) ne présentant sensiblement pas de rapport d'armure.

33. Revêtement de sol selon la revendication 32, **caractérisé par le fait que** les éléments (4, 5, 6) formant la couche utile (2) sont appliqués sur une couche support non consolidée (3), la couche support non consolidée (3) étant consolidée pendant un aiguilletage des éléments (4, 5, 6) formant la couche utile (2), avec la couche support (3).

34. Revêtement de sol selon la revendication 32 ou 33, **caractérisé par le fait que** la couche utile (2) est formée par au moins deux strates d'éléments (4, 5, 6).

35. Revêtement de sol selon la revendication 32, 33 ou 34, **caractérisé par le fait qu'**au moins une partie des éléments (4, 5, 6) présente des fibres orientées selon une direction préférentielle.

36. Revêtement de sol selon l'une des revendications 32 à 35, **caractérisé par le fait que** les éléments (4, 5, 6) conçus sous forme de nappé aiguilletée ont un poids de surface valant entre 200 et 1000 g/m².

37. Revêtement de sol selon l'une des revendications 32 à 36, **caractérisé par le fait qu'**au moins une partie des éléments (4, 5, 6) est formée par des précurseurs de fil d'un numéro métrique valant entre 0,5 Nm et 4,0 Nm.

38. Revêtement de sol selon l'une des revendications 32 à 36, **caractérisé par le fait. qu'**au moins une partie des éléments (4, 5, 6) est formée par des rubans d'étirage d'un numéro métrique valant entre environ 0,5 Nm et 5,0 Nm et/ou par des doublages d'étirage d'un numéro métrique valant entre environ 0,5/3 à 5,0/3 Nm.

39. Revêtement de sol selon l'une des revendications 32 à 36, **caractérisé par le fait qu'**au moins une partie des éléments (4, 5, 6) est formée par des fils cardés-peignés d'un numéro métrique valant entre 2, 0 et 8,0 Nm et/ou par des retors cardés-peignés d'un numéro métrique valant entre 2/2 et 8/2 Nm.

40. Revêtement de sol selon, l'une des revendications 32 à 39, **caractérisé par le fait qu'**au moins une partie des éléments (4, 5, 6) ont une longueur allant d'environ 3 à 120 mm, de préférence d'environ 3 à 10 mm.

41. Installation de fabrication d'un revêtement de sol comportant un dispositif d'application (13) comprenant au moins une station d'application (15, 16, 17), **caractérisé par le fait que** le dispositif d'application (13) présente une carrosserie (18) qui limite un espace (22), au moins un canal d'amenée (19) débouchant au voisinage d'une paroi supérieure (21) dans l'espace (22), un organe de dosage (20) disposé dans le canal d'amenée (19), un organe d'égalisation (24) disposé dans l'espace (22) et un canal de sortie (30) dans lequel est prévu un organe de dosage (31), le canal de sortie (30) présentant au moins un tronçon (28, 29) qui a la forme d'une gaine de compression de sorte que des éléments géométriquement différents (4, 5, 6) sont appliqués sur une surface (9) en formant sur la couche support (3) une couche utile (2) se présentant sensiblement sans rapport d'armure et que ces éléments sont aiguilletés avec la couche support (3) au moyen d'au moins un organe d'aiguilletage (14, 15).

42. Installation selon la revendication 41, **caractérisée par le fait que** le dispositif d'application (13) est un dispositif de dispersion aérodynamique.

43. Installation selon la revendication 41 ou 42, **caractérisée par le fait que** le canal de sortie (30) présente au moins présente au moins un tronçon vibrant (29).

44. Installation selon la revendication 41, 42 ou 43, **caractérisée par le fait que** le canal de sortie (30) présente un tronçon (29) dont la section est variable.

45. Installation selon l'une des revendications 41 à 44, **caractérisée par le fait que** le canal de sortie (30) présente un tronçon (29) qui est formé par au moins deux tapis sans fin (38, 39) entraînés qui sont disposés à distance l'un de l'autre et en face l'un de l'autre.

46. Installation selon la revendication 45, **caractérisée par le fait que** la vitesse des tapis (38, 39) est réglable.

47. Installation selon l'une des revendications 41 à 45, **caractérisée par le fait que** le canal de sortie (30) est disposé sensiblement verticalement.

48. Installation selon l'une des revendications 41 à 47, **caractérisée par le fait qu'**au moins un organe de mélange est relié au dispositif d'application (13).
